(19) Europäisches Patentamt
European Patent Office
Office européen des brevets

(11) EP 2 378 655 B1

(12) EUROPEAN PATENT SPECIFICATION

(45) Date of publication and mention
of the grant of the patent:
**06.03.2019 Bulletin 2019/10**

(51) Int Cl.:
*H02M 1/00* *(2006.01)*          *H02M 7/49* *(2007.01)*
*H02M 7/48* *(2007.01)*          *H02M 5/458* *(2006.01)*

(21) Application number: **09833379.2**

(22) Date of filing: **10.12.2009**

(86) International application number:
**PCT/JP2009/070698**

(87) International publication number:
**WO 2010/071076 (24.06.2010 Gazette 2010/25)**

(54) **METHOD FOR DETECTING OUTPUT CURRENT FROM SERIAL MULTIPLEX INVERTER**

VERFAHREN ZUR DETEKTION VON AUSGANGSSTROM AUS EINEM SERIELLEN MULTIPLEX-UMRICHTER

PROCÉDÉ DE DÉTECTION DE COURANT DE SORTIE D'UN ONDULEUR À MULTIPLEXAGE SÉRIE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.12.2008 JP 2008319054**

(43) Date of publication of application:
**19.10.2011 Bulletin 2011/42**

(73) Proprietor: **Meidensha Corporation
Tokyo 141-0032 (JP)**

(72) Inventor: **HAMADA, Shizunori**
**x (JP)**

(74) Representative: **Manitz Finsterwald Patentanwälte PartmbB
Martin-Greif-Strasse 1
80336 München (DE)**

(56) References cited:
**JP-A- H1 042 569      JP-A- 10 042 569
JP-A- 2003 219 690      JP-A- 2005 086 844
JP-A- 2005 086 844      JP-A- 2009 077 513**

## Description

## TECHNICAL FIELD

The present invention relates to a method for detecting output current of a serial multiplex (or multilevel) inverter, and particularly to a method for detecting the output current of the serial multilevel inverter by sampling of current detection signal and its moving average.

## BACKGROUND ART

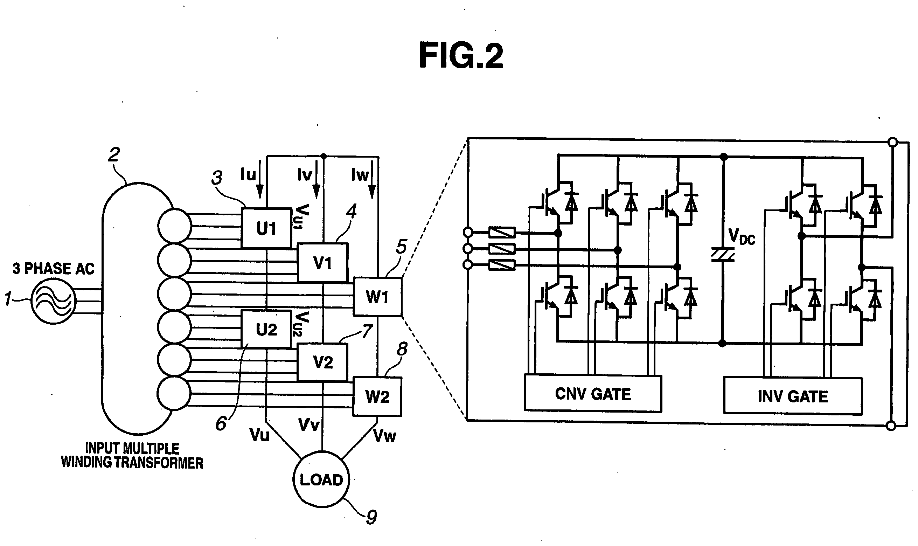

Configuration of a main circuit of a serial multilevel inverter is shown in Fig. 2. Fig. 2 shows, as an example, a case where the number of stages of the inverter is two. However, the number of stages of the inverter is arbitrarily set, and its number of stages is n (n is natural number).

Drawings used in the following description are all shown with the case of the double inverter (the number of stages of the inverter is two) taken for example.

The serial multilevel inverter has a multi-phase winding transformer 2 and six single-phase PWM inverters 3 - 8 (U1, U2, V1, V2, W1, W2) with a three-phase power supply 1 being a power source. In an input, a power supply side higher harmonics are suppressed through the multi-phase winding transformer 2, and its secondary side is connected to each of the single-phase PWM inverters 3 ~ 8. By connecting the same phase outputs of each phase U, V, W of the inverters 3 ~ 8 in series, the serial multilevel inverter is realized, and the serial multilevel inverter supplies high three-phase voltages Vu, Vv, Vw to a load 9 (e.g. see Non-Patent Document 1).

In configuration of a main circuit of the single-phase PWM inverter as shown in the drawing with the inverter 5 being a representative of the inverters, a forward conversion of three-phase alternating current (AC) - direct current (DC) by a convertor section (CNV) and a reverse conversion of DC - single-phase AC by an inverter section (INV) are performed. In the drawing, DC voltage of the inverter section is $V_{DC}$.

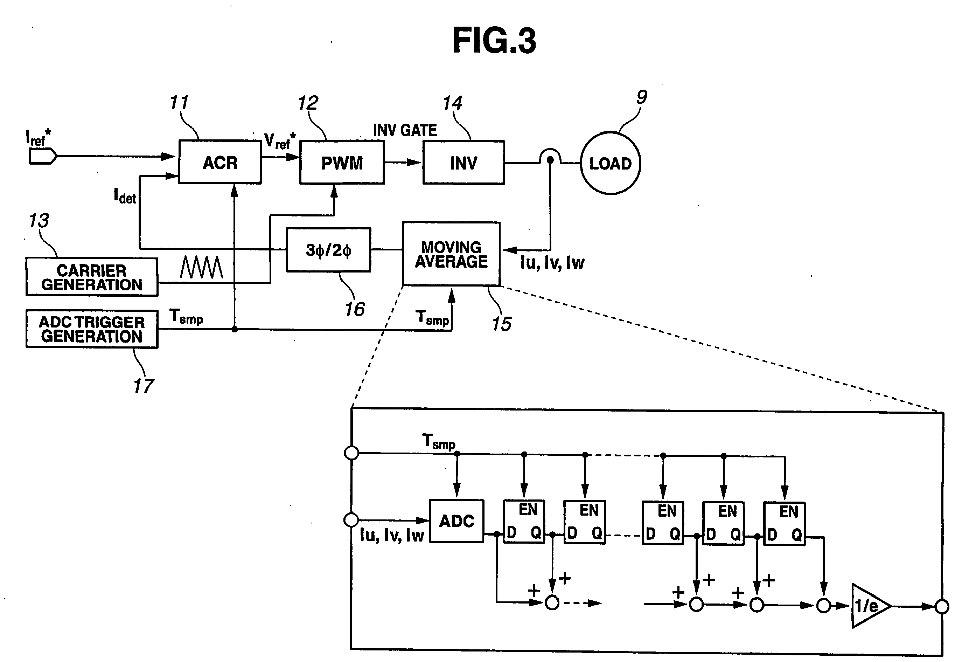

Current control block configuration of the above serial multilevel inverter is shown in Fig. 3. A signal processing function in this block configuration is performed by digital processing using a computer. A current controller 11 (ACR : Automatic Current Regulator) performs a current control using a difference between a current command value $I_{ref}^*$ and a current detection value $I_{det}$. An output of this current controller 11 becomes a voltage command value $V_{ref}^*$ of the serial multilevel inverter. A PWM (Pulse Width Modulation) section 12 generates a PWM waveform by comparing a triangular wave carrier having a cycle $T_{carry}$ which is generated in a carrier generation section 13 with the voltage command value $V_{ref}^*$, and creates each gate command INVgate of a serial multilevel inverter 14 (3-8 in Fig. 2).

For detection of three-phase output currents Iu, Iv, Iw of the serial multilevel inverter 14, a moving average operation is performed by a moving average operation section 15, and accuracy of current detection against disturbance is improved. The moving average current detected in the moving average operation section 15 is converted to current in rectangular coordinates of dq-axes in a three-phase/two-phase conversion section 16, and this current is returned, as feedback, as the current detection value $I_{det}$ of the current controller 11.

In configuration of the moving average operation section 15, as shown in Fig. 3, an AD converter (ADC) performs sampling and digital conversion of each of the detection values of the output currents Iu, Iv, Iw. This digital value is shifted through a cascade connection circuit of D-type flip-flop (a parallel configuration by bit-digits) for a sample hold. Further, a value obtained by adding digital outputs of the ADC and each flip-flop is divided by e through a divider, thereby determining a moving average value.

An interval $T_{smp}$ of this moving average operation is generated in an ADC trigger generation section 17, and synchronizes the D-type flip-flop with a sampling trigger of the AD converter and also with an operation interval of the ACR 11.

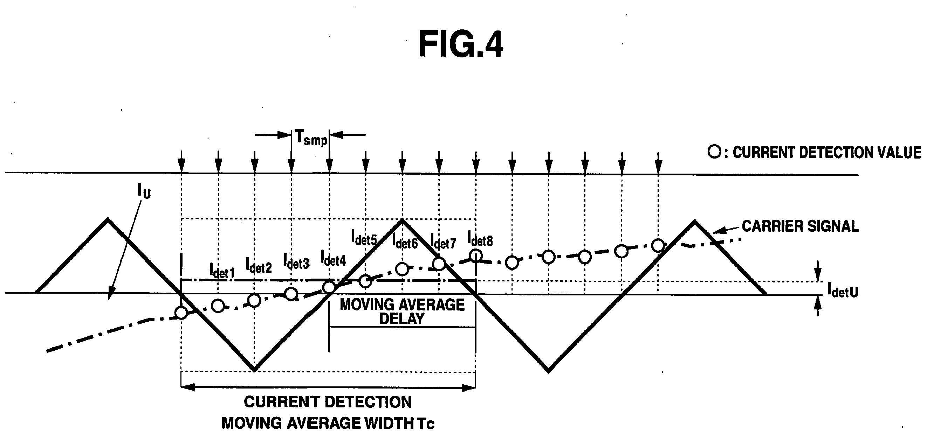

Fig. 4 shows a current detection timing of U-phase by the moving average. A moving average width Tc is set to the identical value to the cycle $T_{carry}$ of a carrier frequency Fc. An update cycle of the ACR is also synchronized with this. Since the number of current detection sampling and the cycle depend on performance of the AD converter, these are arbitrarily set. Fig. 4 shows, as an example, a case where the sampling is made at eight points in one carrier cycle. The sampling interval of this case is $T_{smp}$ = Tc / 8, and the timing is synchronized with a carrier signal. Then a detection value $I_{det\_U}$ of a U-phase load current is determined by an operation of a following expression.

[EXPRESSION 1]

$$I_{det\_U} = \frac{1}{e} \sum_{k=1}^{e} I_{det\,k}$$

Here, e is the number of sampling in the moving average width Tc. (In this example, e = 8)

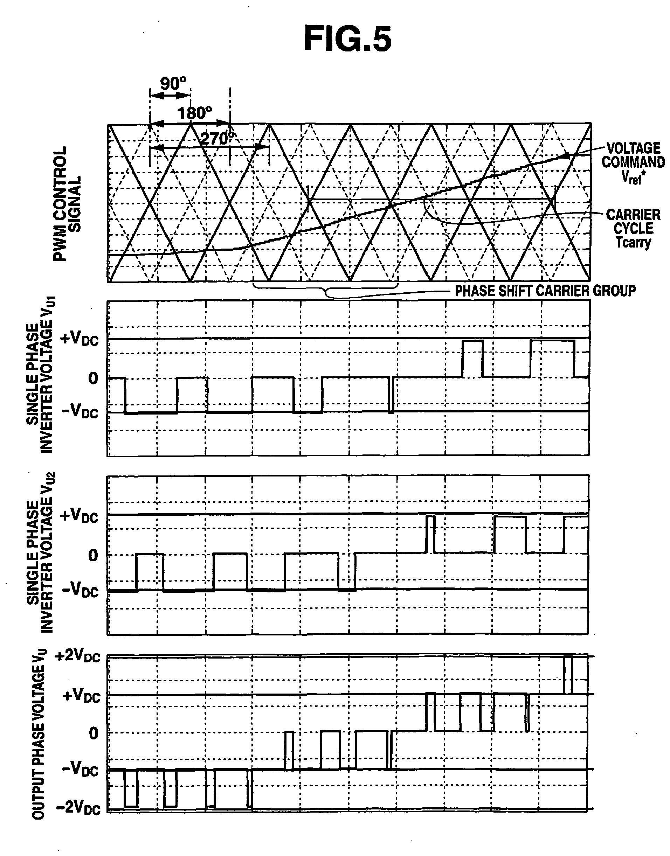

Next, PS (Phase Shift) method in the serial multilevel inverter control method will be explained (see Patent Document 1). The PS method is a method in which phases of a plurality of carrier signals are shifted and are compared with the voltage command. The number of carrier signals used is 2n. A group of these 2n carrier signals is called a phase shift carrier group. The phase shift of the carrier signal is determined by [360° / the number of carrier signals] that is a value by which voltage distortion is decreased most. In the case of the two stage serial multilevel inverter, four carrier signals are arranged by 90° phase difference and each of these is dealt with by the respective single-phase inverter, thereby achieving the Phase Shift. Regarding this example, relationships between the carrier signal, the voltage command value and an output voltage, of the PS method are shown in Fig. 5.

## PRIOR ART DOCUMENT

## NON-PATENT DOCUMENT

Non-Patent Document 1: Tadano, Urushibata, Ogura, Shibaki, Nomura: "A Multilevel PWM Strategy suitable for High-Voltage Motor Direct Drive Systems in Consideration of the Adverse Effect of a Deadtime", The Transactions of the Institute of Electrical Engineers of Japan, D. 126.1 (2006), which was issued in JAPAN.

## PATENT DOCUMENT

Patent Document 1: Japanese Patent Application *Kokai* Publication No. 2006-109688
Furthermore, JP 2003 219690 A discloses a method similar to the preamble of claim 1, wherein no serial multilevel inverter is disclosed. JP H10 42569 A teaches a method for implementing a moving average filter for a single stage inverter. Finally, JP 2005 086844 A describes a serial multi-level inverter without describing how the influence of the PWM switching noise on the output-current control loop can be reduced.

## SUMMARY OF THE INVENTION

## PROBLEMS SOLVED BY THE INVENTION

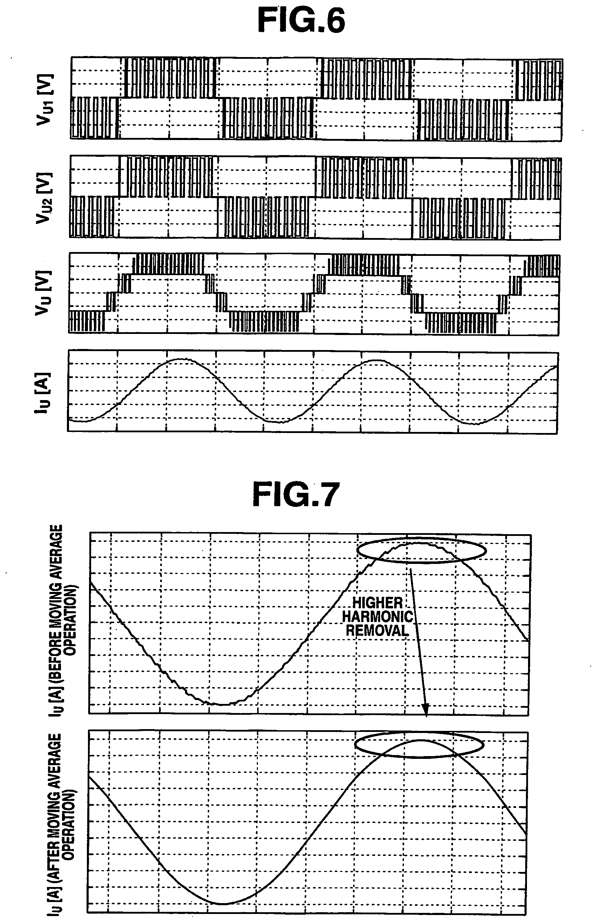

In a case where the current control is performed by the above PS method, an output phase voltage of the serial multilevel inverter becomes a pulse waveform, and the voltage has five levels ($V_U$ in Fig. 6, $V_U = V_{U1} + V_{U2}$ in the case of the two stages, the output voltages of the single-phase inverter units U1 and U2 are $V_{U1}$ and $V_{U2}$ respectively). Therefore, in a case where an inductive load such as a motor is connected, as shown in Fig. 7, although a current detection waveform includes the higher harmonics, this higher harmonics can be removed by the moving average operation, and accuracy of current detection can be ensured.

More specifically, since relatively lower order higher harmonics of output line voltage are decreased by the multiplexing, a higher harmonic main component of the detection current is a frequency component of [carrier frequency $\times$ 2n [Hz]]. In the normal serial multilevel inverter, in order to remove this higher harmonics, a multi-point current detection is performed. In the multi-point current detection, the current detection is performed at some points in one carrier cycle, and is synchronized with the carrier, then by obtaining the moving average, the detection value is determined. Thus, the moving average width Tc becomes equal to the one carrier cycle $T_{carry}$.

In general, as shown in Fig. 3, the control is performed with the control cycle of the ACR synchronized with the carrier cycle . When the ACR is done in the current controller 11, in its current information, a current detection delay by an amount of this one carrier cycle exists. When performing a high response current control, there is a case where a target control can not be done due to the current detection delay.

It is therefore an object of the present invention to provide a method for detecting the output current of the serial multilevel inverter which is capable of detecting the output current with the current detection delay shortened without decreasing accuracy of current detection.

## MEANS TO SOLVE THE PROBLEMS

The present invention is the one in which, in the case where the PWM control is performed by the PS method, although the PWM control cycle of the single-phase inverter is the same as the carrier cycle $T_{carry}$, a plurality of carrier signals which have a different phase exist in the serial multilevel inverter, therefore considering that the PWM control cycle becomes 1 / (2n $\times$ carrier frequency Fc), by also setting the moving average width Tc of the current detection to the same time as the PWM control cycle, the current detection delay due to the moving average becomes a minimum, further the cycle of the current control is set to 1/2 of the moving average width Tc or less and is synchronized with the carrier signal. The present invention is characterized by the following methods.

According to one aspect of the present invention, (1) a method for detecting output current of a serial multilevel inverter, in which each phase of a three-phase inverter is configured by connecting outputs of n-stage single-phase inverters in series, a current control (ACR) is performed by a detection current obtained by calculating a moving average of a sampling value of each phase output current of the three-phase inverter, and 2n carrier signals are shifted to a [360/2n] phase difference and are compared with a voltage command for a PWM control of the each single-phase inverter, the method comprises: setting a moving average width Tc to the same time as a PWM control cycle (1/2n of a cycle $T_{carry}$ of a carrier signal) and synchronizing the moving average width Tc with a peak of the carrier signal; and setting a sampling interval $T_{smp}$ to 1/2 of the moving average width Tc or less and synchronizing the sampling interval $T_{smp}$ with the carrier signal.

According to another aspect of the present invention, (2) in the method for detecting the output current of the serial multilevel inverter, the current control cycle is set to the sampling interval $T_{smp}$.

## EFFECTS OF THE INVENTION

As described above, according to the present invention, the moving average width Tc of the current detection is set to the same time as the PWM control cycle (1/2n of cycle $T_{carry}$ of carrier signal) and is synchronized with the peak of the carrier signal, further the interval $T_{smp}$ of the sampling of the current detection is set to 1/2 of the moving average width Tc or less and is synchronized with the carrier signal, thereby achieving the output current control with the current detection delay shortened without decreasing accuracy of current detection.

## BRIEF DESCRIPTION OF THE DRAWINGS

[FIGURE 1] Figure of current detection timing waveform, which shows an embodiment of the present invention [FIGURE 2] Figure of configuration of a main circuit of a serial multilevel inverter
[FIGURE 3] Figure of current control block configuration of the serial multilevel inverter
[FIGURE 4] Figure of current detection timing waveform of U-phase by moving average
[FIGURE 5] Figure of relationships between a carrier signal, a voltage command value and an output voltage, of a PS method
[FIGURE 6] Figure of relationships between a single-phase inverter output voltage, a multilevel inverter output voltage and output current waveform
[FIGURE 7] An example of waveform of higher harmonic removal by the moving average

## DESCRIPTION OF THE EMBODIMENTS

In configuration of an electric motor current control system by the serial multilevel inverter shown in Fig. 2, in a case where the PWM control is performed by the PS method, the PWM control cycle of the single-phase inverter is the same as the carrier cycle $T_{carry}$. However, since a plurality of carrier signals which have a different phase exist in the serial multilevel inverter, the PWM control cycle becomes $1/(2n \times$ carrier frequency Fc). Therefore, when the moving average width Tc is also set to the same time as the PWM control cycle, the current detection delay due to the moving average becomes a minimum, then wasted time of an ACR response can be shortened.

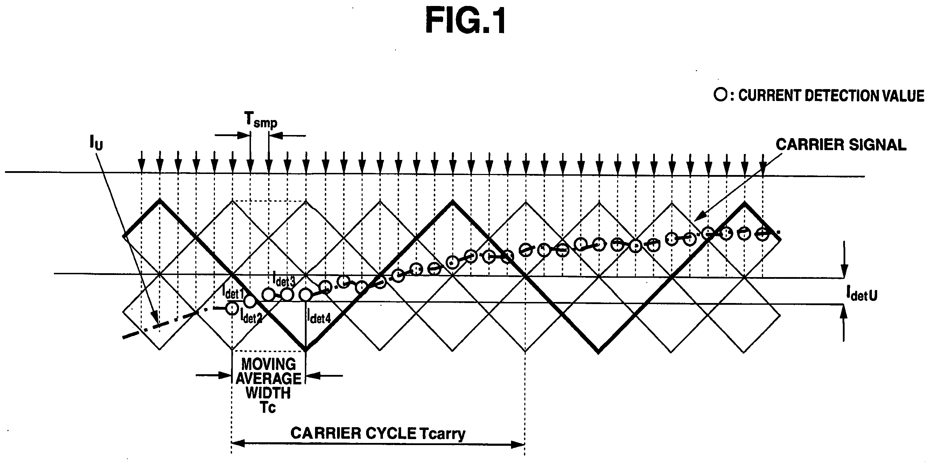

Fig. 1 shows current detection timing, which shows an embodiment of the present invention, and shows current detection timing of U-phase by moving average. As shown in the drawing, in a case where the control cycle of the ACR is set to 1/2n of carrier cycle $T_{carry}$ and is synchronized with the peak of the carrier group, the moving average width Tc for the current detection is set to 1/2n of carrier cycle $T_{carry}$. However, the current sampling interval $T_{smp}$ in the moving average width Tc is set to 1/2 of the moving average width Tc or less. Fig. 1 shows, as an example, a case where the number of sampling points in the moving average width Tc is four.

In the example of Fig. 1, as compared with Fig. 4, the control cycle of the ACR is shortened to 1/2n of carrier cycle $T_{carry}$, the current detection delay time can be also shortened, and the current response can be high. This current response becomes high, thereby also achieving the control with a torque response being high in the case of the motor load.

Here, although the moving average time is shortened, since the carrier multiplexing is carried out, an effect on accuracy of the current detection is small.

## EXPLANATION OF REFERENCE

1    three-phase power supply
2    multi-phase winding transformer
3~8   single-phase PWM inverters
9    load
11   current controller
12   PWM section
13   carrier generation section
14   serial multilevel inverter
15   moving average operation section
16   three-phase/two-phase conversion section
17   ADC trigger generation section

## Claims

1.   A method for detecting output current of a serial multilevel inverter (14), in which each phase of a three-phase inverter is configured by connecting outputs of n-stage single-phase inverters (3-8) in series, **characterized in that:**

a current control (ACR) is performed by a detection current ($I_{det}$) obtained by calculating a moving average of a sampling value of each phase output current (Iu, Iv, Iw) of the three-phase inverter, and 2n carrier signals are shifted to a 360/2n phase difference and are compared with a voltage command for a PWM control of each single-phase inverter (3-8), a moving average width Tc is set to the same time as a PWM control cycle, 1/2n of a cycle $T_{carry}$ of a carrier signal, and the moving average width Tc is synchronized with a peak of the carrier signal; and a sampling interval $T_{smp}$ is set to 1/2 of the moving average width Tc or less and the sampling interval $T_{smp}$ is synchronized with the carrier signal.

2.   The method for detecting the output current of the serial multilevel inverter as claimed in claim 1, wherein:

a cycle of the current control is set to the sampling interval $T_{smp}$.

## Patentansprüche

1. Verfahren zum Detektieren eines Ausgabestroms eines seriellen Mehrstufenumrichters (14), bei dem jede Phase eines dreiphasigen Umrichters konfiguriert ist, indem Ausgänge von n-stufigen einphasigen Umrichtern (3-8) in Reihe verbunden sind, **dadurch gekennzeichnet, dass**:

   eine Stromregelung (ACR) durch einen Detektionsstrom ($I_{det}$) ausgeführt wird, der durch Berechnen eines gleitenden Mittelwerts eines Abtastwerts des Ausgabestroms (Iu, Iv, Iw) von jeder Phase des dreiphasigen Umrichters beschafft wird, und 2n Trägersignale auf eine Phasendifferenz von 360/2n verschoben werden und mit einem Spannungsbefehl für eine PWM-Steuerung jedes einphasigen Umrichters (3-8) verglichen werden, wobei eine Breite Tc des gleitenden Mittelwerts auf die gleiche Zeit wie ein PWM-Steuerungszyklus, 1/2n eines Zyklus $T_{carry}$ eines Trägersignals, gesetzt wird und die Breite Tc des gleitenden Mittelwerts mit einer Spitze des Trägersignals synchronisiert wird; und ein Abtastintervall $T_{smp}$ auf die Hälfte oder weniger der Breite Tc des gleitenden Mittelwerts gesetzt wird und das Abtastintervall $T_{smp}$ mit dem Trägersignal synchronisiert wird.

2. Verfahren zum Detektieren des Ausgabestroms des seriellen Mehrstufenumrichters nach Anspruch 1, wobei:

   ein Zyklus der Stromregelung auf das Abtastintervall $T_{smp}$ gesetzt wird.

## Revendications

1. Procédé de détection du courant de sortie d'un onduleur multiniveaux en série (14), dans lequel chaque phase d'un onduleur triphasé est configurée en connectant en série des sorties d'onduleurs monophasés à n étages (3-8), **caractérisé en ce que** :

   une commande de courant (ACR) est effectuée par un courant de détection ($I_{det}$) obtenu en calculant une moyenne mobile d'une valeur d'échantillonnage de chaque courant de sortie de phase (Iu, Iv, Iw) de l'onduleur triphasé, et 2n signaux porteurs sont déphasés d'un angle de 360/2n et comparés avec une commande de tension pour une commande PWM de chaque onduleur monophasé (3-8), une largeur de moyenne mobile Tc est fixée au même temps qu'un cycle de commande PWM, 1/2n d'un cycle $T_{carry}$ d'un signal porteur, et la largeur de moyenne mobile Tc est synchronisée avec un pic du signal porteur ; et un intervalle d'échantillonnage $T_{smp}$ est fixé à 1/2 de la largeur de moyenne mobile Tc ou moins et l'intervalle d'échantillonnage $T_{smp}$ est synchronisé avec le signal porteur.

2. Procédé de détection du courant de sortie de l'onduleur multiniveaux en série selon la revendication 1, dans lequel :

   un cycle de la commande de courant est fixé à l'intervalle d'échantillonnage $T_{smp}$.

## FIG.1

○: CURRENT DETECTION VALUE

CARRIER SIGNAL

$I_{detU}$

$I_U$

$T_{smp}$

$I_{det1}$ $I_{det2}$ $I_{det3}$ $I_{det4}$

MOVING AVERAGE WIDTH $T_c$

CARRIER CYCLE Tcarry

FIG.2

FIG.3

# FIG.4

O : CURRENT DETECTION VALUE

CARRIER SIGNAL

$T_{smp}$

$I_U$

$I_{det1}$ $I_{det2}$ $I_{det3}$ $I_{det4}$ $I_{det5}$ $I_{det6}$ $I_{det7}$ $I_{det8}$

MOVING AVERAGE
DELAY

$I_{detU}$

CURRENT DETECTION
MOVING AVERAGE WIDTH Tc

EP 2 378 655 B1

# FIG.5

# FIG.6

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006109688 A
- JP 2003219690 A
- JP H1042569 A
- JP 2005086844 A

**Non-patent literature cited in the description**

- **TADANO ; URUSHIBATA ; OGURA ; SHIBAKI ; NOMURA.** A Multilevel PWM Strategy suitable for High-Voltage Motor Direct Drive Systems in Consideration of the Adverse Effect of a Deadtime. *The Transactions of the Institute of Electrical Engineers of Japan,* 2006, vol. D. 126.1